# EUROPEAN PATENT SPECIFICATION

(11) **EP 4 064 526 B1**
(45) Date of publication and mention of the grant of the patent: **26.04.2023**
(21) Application number: 21176805.6
(22) Date of filing: 31.05.2021
(51) Int. Cl.: H02K 1/276

(54) **ROTARY MOTOR SHEET AND ROTOR**
DREHMOTORBLECH UND ROTOR
FEUILLE À MOTEUR ROTATIF ET ROTOR

(30) Priority: 26.03.2021 CN 202110330856
(43) Date of publication of application: 28.09.2022
(73) Proprietor: Hefei Jee Power Systems Co., Ltd., Baohe Industrial Zone 230051 Hefei AnHui (CN)
(72) Inventor: LIU, Lei, Hefei, 230051 (CN); ZHANG, Renzhong, Hefei, 230051 (CN); FAN, Jialun, Hefei, 230051 (CN); FAN, Kun, Hefei, 230051 (CN)
(74) Representative: Sun, Yiming

(56) References cited:
- CN-A- 112 271 838
- CN-A- 112 271 839
- CN-U- 210 985 764
- CN-U- 212 366 955
- CN-U- 212 412 877
- US-A1- 2020 350 794

## Description

### TECHNICAL FIELD

The present invention relates to a motor, in particular to a rotary motor sheet and rotor.

### BACKGROUND

CN112271838A describes a motor rotor with magnetic steel in a double-V arrangement structure. The motor rotor comprises a motor shaft, a rotor core, a first layer of permanent magnets and a second layer of permanent magnets. The rotor core is provided with a plurality of permanent magnet grooves. The first layer of permanent magnets and the second layer of permanent magnets are arranged in corresponding permanent magnet grooves respectively. Two adjacent first-layer permanent magnets and two adjacent second-layer permanent magnets are arranged at an included angle to form a V-shaped permanent magnet unit. The plurality of V-shaped permanent magnet units are arranged in an axial direction. The V-shaped permanent magnet unit formed by the first-layer permanent magnets is positioned in an included angle range area of the V-shaped permanent magnet unit formed by the second-layer permanent magnets. An inner side edge of the first-layer permanent magnet and an outer side edge of the second-layer permanent magnet on a same side of the V-shaped permanent magnet unit are parallel to each other or form an included angle of less than 10 degrees.

CN212412877U describes a high-speed inner rotor motor for an electric motorcycle. The high-speed inner rotor motor for the electric motorcycle comprises a stator and a rotor, wherein a central hole is formed in the stator. The rotor can rotate relative to the stator and comprises a magnetizer, a rotating shaft and a plurality of magnetic steels. The magnetizer penetrates through the center hole. The rotating shaft penetrates through the magnetizer. A plurality of sets of magnetic steel grooves are formed in the magnetizer in a circumferential direction of the magnetizer. Each set of magnetic steel grooves comprises two magnetic steel grooves distributed in a V-shaped structure. Small ends of the V-shaped structures face the rotating shaft. Each magnetic steel groove is used for containing one magnetic steel. First protrusions are arranged at the two ends of an inner wall of each magnetic steel groove.

US2020/350794A1 describes a rotating shaft, a plurality of rotor cores formed by a plurality of rotor punches neatly laminated, and rotor pressure plates installed at front and rear ends of the rotor core. The rotor core is provided with a shaft hole for mounting the rotating shaft in the middle in an axial direction. Two rotor pressure plates press the plurality of rotor punches. The rotating shaft is a hollow shaft. The plurality of rotor punches has a same structure. Each of the rotor punches is provided with a plurality of sets of positioning holes. The plurality of rotor punches is positioned and fixed to the rotating shaft through the plurality of sets of positioning holes to realize oblique poles between rotor segments. The motor rotor assembly structure is made by laminating one type of rotor punches.

At present, drive motors of new energy vehicles are developing in a direction of high speed and high power density. In order to achieve the high speed, a traditional built-in permanent magnet motor is provided with magnetic bridges on both sides of magnets to increase strength of a rotor, and the higher the speed is, the wider the magnetic bridge is.

In technical solutions of the prior art, the method for realizing high speed by providing magnetic bridges on both sides of the magnet may seriously affect the performance of the motor. The material of the magnetic bridge is silicon steel sheet having a good magnetic permeability, which may on one hand reduce torque of the permanent magnet by increasing the flux leakage of the permanent magnet field and on the other hand reduce torque of the reluctance by reducing the reluctance of the D-axis magnetic circuit. Thus, the provision of the magnetic bridges may inevitably lead to a decrease in motor performance, thereby causing the high power density to be difficult. Therefore, an innovative magnetic circuit design is necessary to achieve the high speed and high power density.

### SUMMARY

An objective of the present invention is to provide a rotary motor sheet and rotor by starting from designing magnetic circuits of the rotor sheet, and the present invention adopts a magnetic circuit substantially in a double V-shape to acquire a high saliency ratio via a preferred V-shaped angle, thereby enabling the permanent magnet motor to have high performance.

The present invention is defined by the appended claims.

The present invention has following advantages.
(1) Starting from designing the magnetic circuit of the rotor sheet, the present invention provides a rotary motor sheet, which adopts a magnetic circuit in an approximate double V-shape. Meanwhile, the through hole having a substantially rectangular structure is additionally provided between the pair of second magnet grooves via a preferred V-shaped angle. The through hole can be filled with a non-magnetic material such as resin, plastic or air, which can thereby increase magnetic resistance of the D-axis, such that the motor can have a saliency ratio not less than 2.8 and further have torque and power both increased by at least 10%. Thus, the overall performance of the motor can be improved.
(2) The weight-reducing hole provided between the incircle of the rotor sheet according to the present invention and the magnet can also reduce the weight and improve the power density of the motor while ensuring the electromagnetic performance of the sheet and the strength of the magnet.
(3) According to the rotary motor rotor of the present invention, the multiple segments of the skewed poles of the rotor can be achieved via cooperation between the positioning holes on the sheet body and the positioning screw. Thus, the assembly process is simple, and the efficiency is high.

### BRIEF DESCRIPTION OF THE DRAWINGS

The present invention will be further described with reference to the accompanying drawings and embodiments.
FIG. 1 is a schematic structural diagram of a rotary motor sheet according to the present invention;
FIG. 2 is a schematic structural diagram of a single magnetic pole of the rotary motor sheet according to the present invention;
FIG. 3 is a parameter labeling diagram of a single magnetic pole of the rotary motor sheet according to the present invention;
FIG. 4 is a parameter labeling diagram of a weight-reducing hole of the rotary motor sheet according to the present invention;
FIG. 5 is a parameter labeling diagram of a through hole of the rotary motor sheet according to the present invention;
FIG. 6 is a schematic diagram of angles of positioning holes of the rotary motor sheet according to the present invention; and
FIG. 7 is a schematic diagram of multiple segments of skewed poles of the rotary motor rotor according to the present invention.

Reference numbers in the drawings are described as below: 1-first magnet groove; 101-outer end of the first magnet groove; 102-inner end of the first magnet groove; 2-second magnet groove; 201-outer end of the second magnet groove; 202-inner end of the second magnet groove; 3-first magnet; 4-second magnet; 5-through hole; 6-first magnetic bridge; 7-second magnetic bridge; 8-third magnetic bridge; 9-fourth magnetic bridge; 10-weight-reducing hole; 11-positioning hole; 12-riveting point; and 13-D-axis center line.

### DETAILED DESCRIPTION

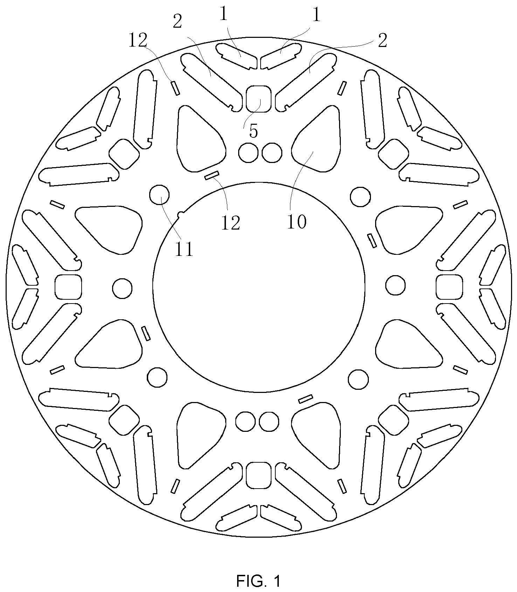

As shown in FIG. 1, the rotary motor sheet according to the present invention includes a sheet body. The sheet body includes a plurality of magnetic poles symmetrically distributed in a circumferential direction of the sheet body, wherein each magnetic pole includes two first magnet grooves 1 in which a first magnet 3 is provided and two second magnet grooves 2 in which a second magnet 4 is provided. After the first magnet grooves 1 and the second magnet grooves 2 are assembled with the magnets, they may both include air portions in outer and inner sides, which namely forms outer ends 101 of the first magnet grooves, inner ends 102 of the first magnet grooves, outer ends 201 of the second magnet grooves, and inner ends 202 of the second magnet grooves.

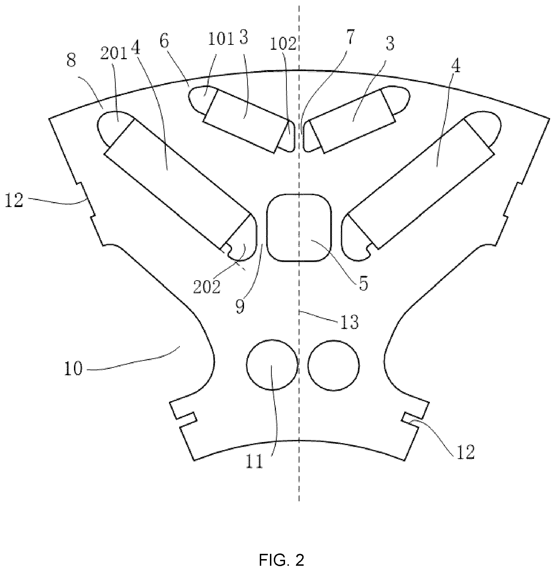

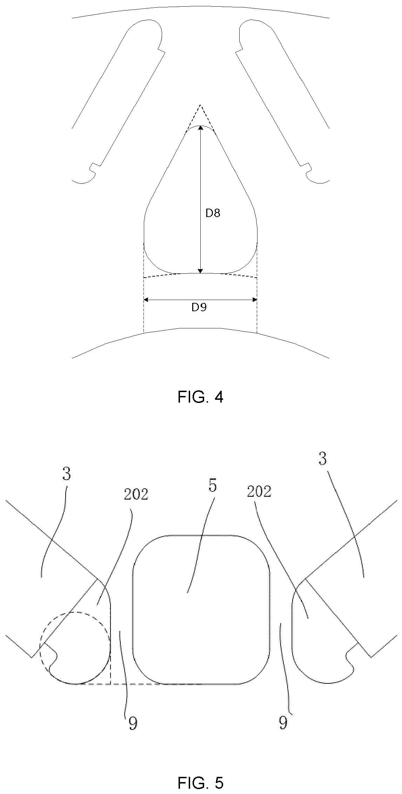

As shown in FIG. 2, the pair of first magnet grooves 1 and the pair of second magnet grooves 2 are both symmetrically distributed in a D-axis center line 13 of the magnetic pole, respectively; a spacing between the pair of first magnet grooves 1 and a spacing between the pair of second magnet grooves 2 are both widened in an outer circumferential direction of the sheet along the D-axis center line 13 of the magnetic pole; and a through hole 5 symmetrical about the D-axis center line 13 of the magnetic pole is provided between the every two second magnet grooves 2. As shown in FIG. 5, the through hole substantially having a rectangular structure is symmetrical about the D-axis center line 13 of the magnetic pole. The through hole 5 can be filled with a non-magnetic material, such as resin or air. Upper and lower edges of the through hole 5 are perpendicular to the D-axis center line 13 of the magnetic pole, and left and right edges the through hole 5 are parallel to the D-axis center line 13. The edges of the through hole 5 parallel and perpendicular to the D-axis center line 13 are 7.5 mm and 7 mm, respectively. A connecting line between two points of the pair of second magnet grooves 2, which have a shortest distance to a center point of the sheet, is collinear with the lower edge of the through hole 5, and a distance D6 from the upper edge of the through hole 5 to a connecting line between two closest points of the pair of second magnets 4 is 2.2 mm.

According the present invention, the through hole 5 that can be filled with the non-magnetic material such as resin or air is additionally provided between the pair of second magnet grooves 2, such that the D-axis reluctance can be increased without affecting the Q-axis reluctance. Therefore, the saliency ratio of the motor can be increased, and the performance of the motor can be improved.

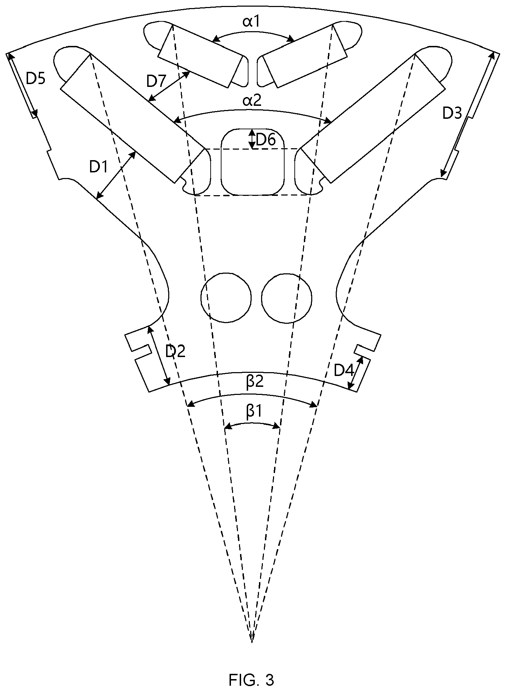

As shown in FIG. 3, an angle α1 between the two first magnet grooves 1 is greater than an angle α2 between the two second magnet grooves 2. The angle α1 between the two first magnet grooves 1 is 131°, and the angle α2 of the two second magnet grooves 2 is 100°. A pole arc angle β1 between the first magnets 3 is 14.6°, a pole arc angle β2 between the second magnets 4 is 30.5°, and a distance D7 from a midpoint of an inner edge of the first magnet 3 to a midpoint of an outer edge of the second magnet 4 corresponding to the first magnet 3 is 6 mm. An extension line of a long edge of the magnet of the second magnet groove 2 is tangent to the inner end 202 of the second magnet groove 2.

Starting from designing the magnetic circuit of the rotor sheet, the present invention provides a rotary motor sheet, which adopts a magnetic circuit substantially in a double V-shape to acquire a high saliency ratio via a preferred V-shaped angle, thereby enabling the permanent magnet motor to have high performance.

First magnetic bridges 6 are formed between outer ends 101 of the first magnet grooves 1 and an excircle of the sheet; second magnetic bridges 7 are formed between inner ends 102 of the first magnet grooves 1; third magnetic bridges 8 are formed between outer ends 201 of the second magnet grooves and the excircle of the sheet; and fourth magnetic bridges 9 are formed between inner ends 202 of the second magnet grooves 2 and the through hole 5. As shown in FIG. 3, the first magnetic bridge 6 has a width of 1 mm, the second magnetic bridge 7 has a width of 1 mm, the third magnetic bridge 8 has a width of 1.5 mm, and the fourth magnetic bridge 9 has a width of 1.15 mm.

As shown in FIGS. 3-4, weight-reducing holes 10 are provided between the incircle of the sheet and a triangular area between every two adjacent magnetic poles. The weight-reducing hole 10 includes five edges. For the five edges, an inner edge is an arc line segment having a center point of the sheet as a circle point, and a distance D2 from the inner edge to the incircle of the sheet is 7 mm; two middle edges are parallel to each other and have a distance D9 of 13.2 mm; and two outer edges are parallel to the inner edges of the second magnet grooves 2 corresponding to left and right magnetic poles, and a distance D1 from the outer edges to the second magnet grooves 2 is 7 mm. A distance D3 from an outermost point to the excircle of the sheet is 15.4 mm, and a distance D8 from the outermost point to the inner edge is 19 mm. The weight-reducing holes can reduce the weight of the motor and increase the power density.

An inner ring of riveting points 12 and an outer ring of riveting points 12 are distributed in the sheet body, and the riveting points 12 have a rectangular structure with a length of 4 mm and a width of 1 mm. The two rings of riveting points are both disposed on a symmetry line of adjacent magnetic poles of the rotor sheet. The outer ring of riveting points is disposed between adjacent magnetic poles, and the inner ring of riveting points is disposed between the weight-reducing holes 10 and the incircle of the sheet. A distance D5 from the outer ring of riveting points to the excircle of the sheet is 7.9 mm, and a distance D4 from the inner ring of riveting points to the incircle of the sheet is 4 mm.

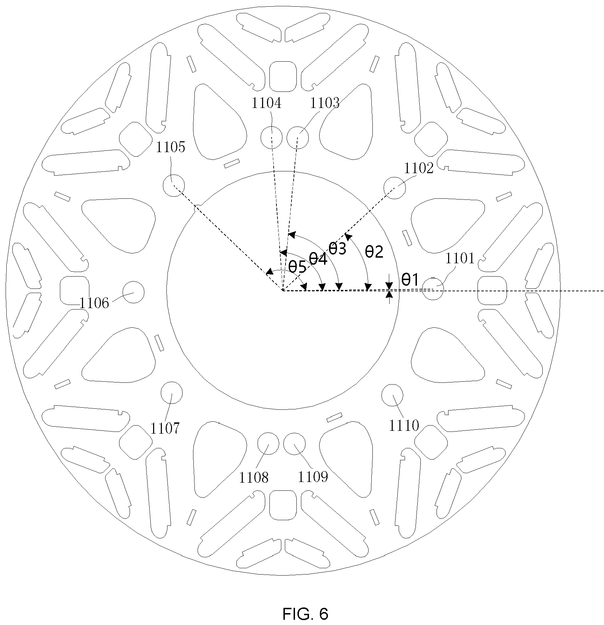

As shown in FIG. 6, positioning holes 11 are provided between adjacent weight-reducing holes 10. Two positioning holes 11 are distributed between every two weight-reducing holes 10 symmetric with each other about the center point of the sheet, and one positioning hole 11 is distributed between every other two weight-reducing holes 10.

According to this embodiment, the number of the magnetic poles is eight, and accordingly, the number of the positioning holes 11 is ten. Here, a first positioning hole 1101 is spaced apart from a sixth positioning hole 1106 by 180°, a second positioning hole 1102 is spaced apart from a seventh positioning hole 1107 by 180°, a third positioning hole 1103 is spaced apart from an eighth positioning hole 1108 by 180°, a fourth positioning hole 1104 is spaced apart from a ninth positioning hole 1109 by 180°, and a fifth positioning hole 1105 is spaced apart from a tenth positioning hole 1110 by 180°. Taking the D-axis center line of the magnetic pole corresponding to the first positioning hole 1101 as a reference line, angles θ1, θ2, θ3, θ4 and θ5 between the reference line and connecting lines between the center point of the sheet and center points of the first positioning hole 1101, the second positioning hole 1102, the third positioning hole 1103, the fourth positioning hole 1104 and the fifth positioning hole 1105 range from 0.5° to 1°, from 41.5° to 42°, from 84° to 84.5°, from 94° to 94.5°, and from 136.5° to 137°, respectively.

Further, preferably, θ1 is 0.625°, θ2 is 41.875°, θ3 is 84.375°, θ4 is 94.375°, and θ5 is 136.875°.

This embodiment further provides a rotary motor rotor, which adopts the rotary motor sheet. The rotary motor rotor includes a rotation shaft and a number of rotary motor sheets sleeved on the rotation shaft via the incircles of the sheets, and further includes a positioning screw, wherein multiple segments of skewed poles of the rotor can be achieved via cooperation between the positioning holes on the sheet body and the positioning screw.

The multiple segments of the skewed poles of the rotor core can be achieved via the cooperation of the positioning holes and one positioning screw in a following manner. By taking a side of the sheet as viewed in FIG. 6 as A side and the other side as the B side, the positioning screw is assembled on the rotation shaft as follows:
for a first segment, the positioning screw is inserted into the positioning hole (1103) on B side;
for a second segment, the positioning screw is inserted into the positioning hole (1102) on B side;
for a third segment, the positioning screw is inserted into the positioning hole (1101) on A side;
for a fourth segment, the positioning screw is inserted into the positioning hole (1101) on B side;
for a fifth segment, the positioning screw is inserted into the positioning hole (1105) on A side; and
for a sixth segment, the positioning screw is inserted into the positioning hole (1104) on A side.

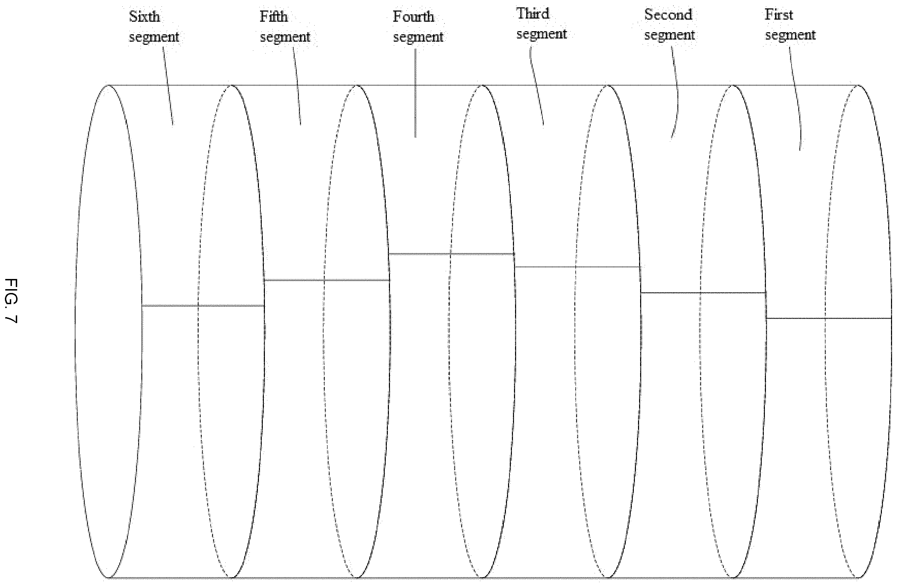

By taking the first segment as a reference and a counterclockwise direction as positive, as viewed from the sixth segment of an iron core to the first segment of the iron core, rotation angles from the second segment to the sixth segment of the iron core relative to an adjacent previous segment are 2.5°, 2.5°, 1.25°, -2.5°, and -2.5°, respectively. FIG. 7 shows the effect after forming the skewed poles.

According to the present invention, the multiple segments of the skewed poles of the rotor can be achieved via cooperation between the positioning holes on the sheet body and the positioning screw. Thus, the assembly process is simple, and the efficiency is high.

The foregoing embodiments merely serve to illustrate technical concepts and features of the present invention, and their objective is to enable those skilled in the art to understand the content of the present invention and to implement it accordingly, but not to limit the scope of protection of the present invention.

## Claims

1. A rotary motor sheet, comprising a central circular hole, defining a center point of the sheet, and a sheet body, said sheet
body having an incircle defined by a contour of said central circular hole, said sheet body having an excircle defined by a circular outer contour of said sheet body, the sheet body comprising a plurality of magnetic poles distributed in a circumferential direction of the sheet body, and each magnetic pole comprising a pair of first magnet grooves (1) and a pair of second magnet grooves (2),
wherein, for each magnetic pole, the pair of first magnet grooves (1) and the pair of second magnet grooves (2) are both symmetrically distributed with respect to a D-axis center line (13) of the magnetic pole, respectively; a spacing between the pair of first magnet grooves (1) and a spacing between the pair of second magnet grooves (2) are both widened in an radially outer circumferential direction of the sheet along the D-axis center line (13) of the magnetic pole; and a through hole (5) symmetrical about the D-axis center line (13) of the magnetic pole is provided between the two second magnet grooves (2) of said pair of second magnet grooves (2) of said magnetic pole;
wherein, for each magnetic pole, first magnetic bridges (6) are formed between radially outer ends (101) of each of the magnet grooves of the pair of first magnet grooves (1) and an excircle of the sheet, respectively; a second magnetic bridge (7) is formed between radially inner ends (102) of each of the magnet grooves of the pair of first magnet grooves (1); third magnetic bridges (8) are formed between radially outer ends (201) of each of the magnet grooves of the pair of second magnet grooves and the excircle of the sheet, respectively; and fourth magnetic bridges (9) are formed between radially inner ends (202) of each of the magnet grooves of the pair of second magnet grooves (2) and the through hole (5), respectively;
wherein a weight-reducing hole (10) is provided between said incircle of the sheet and an area between every two adjacent magnetic poles;
and wherein a positioning hole (11) is provided between every two adjacent weight-reducing holes;
**characterized in that** each weight-reducing hole (10) includes five edges, and wherein, for each weight-reducing hole (10), a radially inner edge of said weight-reducing hole (10) is an arc line segment having the center point of the sheet as a circle point, and a distance (D2) from said radially inner edge to the incircle of the sheet ranges from 6.5 mm to 7.5 mm; two middle edges of said weight-reducing hole (10) are parallel to each other and have a distance (D9) ranging from 12.5 mm to 13.5 mm; each of two radially outer edges of said weight-reducing hole (10) is parallel to a radially inner edge of the second magnet groove (2) among said second magnet grooves (2) which is most adjacent to said outer edge of said weight-reducing hole (10), and a distance (D1) from said radially outer edges to said most adjacent second magnet groove (2) ranges from 6.5 mm to 7.5 mm; a distance (D3) from an radially outermost point of said weight-reducing hole (10) to said excircle of the sheet ranges from 15 mm to 16 mm; and a distance (D8) from said radially outermost point to said radially inner edge of said weight-reducing hole (10) ranges from 18.5 mm to 19.5 mm.

2. The rotary motor sheet according to claim 1, wherein an radially inner ring of riveting points (12) and an radially outer ring of riveting points (12) are distributed in the sheet body; and the riveting points (12) of said two rings are all disposed on symmetry lines of adjacent magnetic poles of said rotary motor sheet, wherein said riveting points of the radially outer ring of riveting points are disposed between adjacent magnetic poles, and said riveting points of the radially inner ring of riveting points are disposed between the weight-reducing holes (10) and the incircle of the sheet.

3. The rotary motor sheet according to claim 2, wherein with each of said magnetic poles an angle α1 between the first magnet grooves (1) of said pair of first magnet grooves (1) of this magnetic pole is greater than an angle α2 between the second magnet grooves (2) of said pair of second magnet grooves (2) of this magnetic pole; wherein the angle α1 ranges from 130° to 135°, and the angle α2 ranges from 95° to 105°.

4. The rotary motor sheet according to claim 2, wherein each of the first magnet grooves (1) is configured to position a first magnet (3) in said first magnet groove (1), wherein each of the second magnet grooves (2) is configured to position a second magnet (4) in said second magnet groove (2), wherein when a pair of first magnets (3) is positioned in said pair of first magnet grooves (1) of any of said magnetic poles and a pair of second magnets (4) is positioned in said pair of second magnet grooves (2) of this magnetic pole, a pole arc angle (β1) between said first magnets (3) of said pair of the first magnets (3) ranges from 14° to 15°, wherein a pole arc angle (β2) between said second magnets (4) of said pair of the second magnets (4) ranges from 30° to 31°, and wherein a distance (D7) from a midpoint of an radially inner edge of any of said first magnets (3) of said pair of first magnets (3) to a midpoint of an radially outer edge of the second magnet (4) of said pair of second magnets (4) most adjacent to the first magnet (3) ranges from 5.5 mm to 6.5 mm.

5. The rotary motor sheet according to claim 2, wherein with each of said magnetic poles radially inner and outer edges of the through hole (5) of this magnetic pole are perpendicular to the D-axis center line (13) of this magnetic pole; wherein two edges of the through hole (5) are parallel to the D-axis center line (13); and the edges of the through hole (5) have a width ranging from 7 mm to 8 mm.

6. The rotary motor sheet according to claim 5, wherein with each of said magnetic poles a connecting line between two points of the pair of second magnet grooves (2) of this magnetic pole, which have a shortest distance to a center point of the sheet, is collinear with the radially inner edge of the through hole (5) of this magnetic pole, and a distance (D6) from the radially outer edge of the through hole (5) to a connecting line between two closest points of the pair of second magnets (4) when positioned in said pair of second magnet grooves (2) ranges from 2 mm to 2.5 mm.

7. The rotary motor sheet according to claim 2, wherein each of the first magnetic bridges (6) has a width ranging from 0.9 mm to 1.1 mm, each of the second magnetic bridges (7) has a width ranging from 0.9 mm to 1.1 mm, each of the third magnetic bridges (8) has a width ranging from 1.4 mm to 1.6 mm, and each of the fourth magnetic bridges (9) has a width ranging from 1.1 mm to 1.2 mm.

8. The rotary motor sheet according to claim 2, wherein an extension line of a long edge of each of the second magnet grooves (2) is tangent to the radially inner end (202) of this second magnet groove (2).

9. The rotary motor sheet according to claim 2, wherein the positioning holes (11) are distributed between the weight-reducing holes (10),
wherein a first pair of said positioning holes (11) is distributed between a first pair of adjacent weight-reducing holes (10),
wherein a second pair of said positioning holes (11) is distributed between a second pair of adjacent weight-reducing holes (10), wherein the first pair of adjacent weight-reducing holes (10) and the second pair of adjacent weight-reducing holes (10) are symmetric with each other about the center point of the rotary motor sheet, and
wherein one positioning hole (11) is distributed between every other two adjacent weight-reducing holes (10).

10. The rotary motor sheet according to claim 1, wherein the number of the magnetic poles is eight, and accordingly, the number of positioning holes (11) is ten, wherein a first positioning hole (1101) is spaced apart from a sixth positioning hole (1106) by 180°, a second positioning hole (1102) is spaced apart from a seventh positioning hole (1107) by 180°, a third positioning hole (1103) is spaced apart from an eighth positioning hole (1108) by 180°, a fourth positioning hole (1104) is spaced apart from a ninth positioning hole (1109) by 180°, and a fifth positioning hole (1105) is spaced apart from a tenth positioning hole (1110) by 180°; and taking the D-axis center line of the magnetic pole corresponding to the first positioning hole (1101) as a reference line, angles θ1, θ2, θ3, θ4 and θ5 between the reference line and connecting lines from the center point of the sheet to center points of the first positioning hole (1101), the second positioning hole (1102), the third positioning hole (1103), the fourth positioning hole (1104), and the fifth positioning hole (1105) range from 0.5° to 1°, from 41.5° to 42°, from 84° to 84.5°, from 94° to 94.5°, and from 136.5° to 137°, respectively.

11. The rotary motor sheet according to claim 2, wherein a distance (D5) from the radially outer ring of riveting points to the excircle of the sheet ranges from 7.5 mm to 8.5 mm, and a distance (D4) from the radially inner ring of riveting points to the incircle of the sheet ranges from 3.5 mm to 4.5 mm.

12. A rotary motor rotor comprising a rotation shaft, a positioning screw, and a number of rotary motor sheets according to any of the preceding claims, wherein each of said rotary motor sheets is sleeved on the rotation shaft via said central circular hole of the rotary motor sheet, wherein a skew of multiple segments of said magnetic poles is achieved via cooperation between the positioning holes (11) and the positioning screw.

13. The rotary motor rotor according to claim 12, wherein the number of the skewed multiple segments of said magnetic poles is six, wherein by taking a first segment as a reference and a counterclockwise direction as positive, as viewed from a sixth segment of an iron core to a first segment of the iron core, rotation angles from a second segment to the sixth segment of the iron core relative to an adjacent previous segment are 2.5°, 2.5°, 1.25°, -2.5°, and -2.5°, respectively.

## Patentansprüche

1. Rotationsmotorblech, umfassend ein zentrales kreisförmiges Loch, das einen Mittelpunkt des Blechs definiert, und einen Blechkörper, wobei der Blechkörper einen Innenkreis aufweist, der durch eine Kontur des zentralen kreisförmigen Lochs definiert ist, wobei der Blechkörper einen Außenkreis aufweist, der durch eine kreisförmige Außenkontur des Blechkörpers definiert ist, wobei der Blechkörper mehrere Magnetpole umfasst, die in einer Umfangsrichtung des Blechkörpers verteilt sind, und wobei jeder Magnetpol ein Paar von ersten Magnetnuten (1) und ein Paar von zweiten Magnetnuten (2) umfasst,
wobei für jeden Magnetpol das Paar von ersten Magnetnuten (1) und das Paar von zweiten Magnetnuten (2) jeweils beide symmetrisch in Bezug auf eine D-Achsen-Mittellinie (13) des Magnetpols verteilt sind; ein Abstand zwischen dem Paar von ersten Magnetnuten (1) und ein Abstand zwischen dem Paar von zweiten Magnetnuten (2) beide in einer radial äußeren Umfangsrichtung des Blechs entlang der D-Achsen-Mittellinie (13) des Magnetpols verbreitert sind; und ein Durchgangsloch (5) symmetrisch um die D-Achsen-Mittellinie (13) des Magnetpols zwischen den zwei zweiten Magnetnuten (2) des Paares von zweiten Magnetnuten (2) des Magnetpols vorgesehen ist;
wobei für jeden Magnetpol erste magnetische Brücken (6) jeweils zwischen den radial äußeren Enden (101) jeder der Magnetnuten des Paares von ersten Magnetnuten (1) und einem Außenkreis des Blechs gebildet sind;
wobei eine zweite Magnetbrücke (7) zwischen radial inneren Enden (102) jeder der Magnetnuten des Paares von ersten Magnetnuten (1) gebildet ist; dritte Magnetbrücken (8) jeweils zwischen radial äußeren Enden (201) jeder der Magnetnuten des Paares von zweiten Magnetnuten und dem Außenkreis des Blechs gebildet sind; und vierte Magnetbrücken (9) jeweils zwischen radial inneren Enden (202) jeder der Magnetnuten des Paares von zweiten Magnetnuten (2) und dem Durchgangsloch (5) gebildet sind;
wobei ein gewichtsreduzierendes Loch (10) zwischen dem Innenkreis des Blechs und einem Bereich zwischen jeweils zwei benachbarten Magnetpolen vorgesehen ist;
und wobei zwischen jeweils zwei benachbarten gewichtsreduzierenden Löchern ein Positionierungsloch (11) vorgesehen ist;
**dadurch gekennzeichnet, dass** jedes gewichtsreduzierende Loch (10) fünf Kanten aufweist, und wobei für jedes gewichtsreduzierende Loch (10) eine radial innere Kante des gewichtsreduzierenden Lochs (10) ein Bogenliniensegment ist, das den Mittelpunkt des Blechs als einen Kreispunkt aufweist, und ein Abstand (D2) von der radial inneren Kante zu dem Innenkreis des Blechs in einem Bereich von 6,5 mm bis 7,5 mm liegt; zwei mittlere Kanten des gewichtsreduzierenden Lochs (10) parallel zueinander sind und einen Abstand (D9) in einem Bereich von 12,5 mm bis 13,5 mm aufweisen; jede der beiden radial äußeren Kanten des gewichtsreduzierenden Lochs (10) parallel zu einer radial inneren Kante der zweiten Magnetnut (2) unter den zweiten Magnetnuten (2) ist, die der äußeren Kante des gewichtsreduzierenden Lochs (10) am nächsten liegt, und ein Abstand (D1) von den radial äußeren Kanten zu der am nächsten liegenden zweiten Magnetnut (2) in einem Bereich von 6,5 mm bis 7,5 mm liegt; ein Abstand (D3) von einem radial äußersten Punkt des gewichtsreduzierenden Lochs (10) zu dem Außenkreis des Blechs in einem Bereich von 15 mm bis 16 mm liegt; und ein Abstand (D8) von dem radial äußersten Punkt zu der radial inneren Kante des gewichtsreduzierenden Lochs (10) in einem Bereich von 18,5 mm bis 19,5 mm liegt.

2. Rotationsmotorblech nach Anspruch 1, wobei ein radial innerer Ring von Nietpunkten (12) und ein radial äußerer Ring von Nietpunkten (12) in dem Blechkörper verteilt sind; und die Nietpunkte (12) der beiden Ringe alle auf Symmetrielinien von benachbarten Magnetpolen des Rotationsmotorblechs angeordnet sind, wobei die Nietpunkte des radial äußeren Rings von Nietpunkten zwischen benachbarten Magnetpolen angeordnet sind und die Nietpunkte des radial inneren Rings von Nietpunkten zwischen den gewichtsreduzierenden Löchern (10) und dem Innenkreis des Blechs angeordnet sind.

3. Rotationsmotorblech nach Anspruch 2, wobei bei jedem der Magnetpole ein Winkel α1 zwischen den ersten Magnetnuten (1) des Paares von ersten Magnetnuten (1) dieses Magnetpols größer ist als ein Winkel α2 zwischen den zweiten Magnetnuten (2) des Paares von zweiten Magnetnuten (2) dieses Magnetpols; wobei der Winkel α1 in einem Bereich von 130° bis 135° liegt und der Winkel α2 in einem Bereich von 95° bis 105° liegt.

4. Rotationsmotorblech nach Anspruch 2, wobei jede der ersten Magnetnuten (1) so eingerichtet ist, dass sie einen ersten Magneten (3) in der ersten Magnetnut (1) positioniert, wobei jede der zweiten Magnetnuten (2) so eingerichtet ist, dass sie einen zweiten Magneten (4) in der zweiten Magnetnut (2) positioniert, wobei, wenn ein Paar von ersten Magneten (3) in dem Paar von ersten Magnetnuten (1) eines der Magnetpole positioniert ist und ein Paar von zweiten Magneten (4) in dem Paar von zweiten Magnetnuten (2) dieses Magnetpols positioniert ist, ein Polbogenwinkel (β1) zwischen den ersten Magneten (3) des Paares der ersten Magnete (3) in einem Bereich von 14° bis 15° liegt, wobei ein Polbogenwinkel (β2) zwischen den zweiten Magneten (4) des Paares der zweiten Magnete (4) in einem Bereich von 30° bis 31° liegt, und wobei ein Abstand (D7) von einem Mittelpunkt einer radial inneren Kante eines der ersten Magnete (3) des Paares der ersten Magnete (3) zu einem Mittelpunkt einer radial äußeren Kante des zweiten Magneten (4) des Paares von zweiten Magneten (4), die dem ersten Magneten (3) am nächsten sind, in einem Bereich von 5,5 mm bis 6,5 mm liegt.

5. Rotationsmotorblech nach Anspruch 2, wobei bei jedem der Magnetpole radial innere und äußere Kanten des Durchgangslochs (5) dieses Magnetpols senkrecht zu der D-Achsen-Mittellinie (13) dieses Magnetpols sind; wobei zwei Kanten des Durchgangslochs (5) parallel zu der D-Achsen-Mittellinie (13) sind; und die Kanten des Durchgangslochs (5) eine Breite in einem Bereich von 7 mm bis 8 mm aufweisen.

6. Rotationsmotorblech nach Anspruch 5, wobei bei jedem der Magnetpole eine Verbindungslinie zwischen zwei Punkten des Paares von zweiten Magnetnuten (2) dieses Magnetpols, die den kürzesten Abstand zu einem Mittelpunkt des Blechs haben, kollinear mit der radial inneren Kante des Durchgangslochs (5) dieses Magnetpols ist, und ein Abstand (D6) von der radial äußeren Kante des Durchgangslochs (5) zu einer Verbindungslinie zwischen zwei nächstgelegenen Punkten des Paares von zweiten Magneten (4), wenn sie in dem Paar von zweiten Magnetnuten (2) positioniert sind, in einem Bereich von 2 mm bis 2,5 mm liegt.

7. Rotationsmotorblech nach Anspruch 2, wobei jede der ersten Magnetbrücken (6) eine Breite in einem Bereich von 0,9 mm bis 1,1 mm aufweist, jede der zweiten Magnetbrücken (7) eine Breite in einem Bereich von 0,9 mm bis 1,1 mm aufweist, jede der dritten Magnetbrücken (8) eine Breite in einem Bereich von 1,4 mm bis 1,6 mm aufweist und jede der vierten Magnetbrücken (9) eine Breite in einem Bereich von 1,1 mm bis 1,2 mm aufweist.

8. Rotationsmotorblech nach Anspruch 2, wobei eine Verlängerungslinie einer langen Kante jeder der zweiten Magnetnuten (2) tangential zu dem radial inneren Ende (202) dieser zweiten Magnetnut (2) verläuft.

9. Rotationsmotorblech nach Anspruch 2, wobei die Positionierungslöcher (11) zwischen den gewichtsreduzierenden Löchern (10) verteilt sind,
wobei ein erstes Paar der Positionierungslöcher (11) zwischen einem ersten Paar benachbarter gewichtsreduzierender Löcher (10) verteilt ist,
wobei ein zweites Paar der Positionierungslöcher (11) zwischen einem zweiten Paar benachbarter gewichtsreduzierender Löcher (10) verteilt ist, wobei das erste Paar benachbarter gewichtsreduzierender Löcher (10) und das zweite Paar benachbarter gewichtsreduzierender Löcher (10) symmetrisch zueinander um den Mittelpunkt des Rotationsmotorblechs sind, und
wobei ein Positionierungsloch (11) zwischen jeweils zwei benachbarten gewichtsreduzierenden Löchern (10) verteilt ist.

10. Rotationsmotorblech nach Anspruch 1, wobei die Anzahl der Magnetpole acht ist und dementsprechend die Anzahl der Positionierungslöcher (11) zehn ist, wobei ein erstes Positionierungsloch (1101) von einem sechsten Positionierungsloch (1106) um 180° beabstandet ist, ein zweites Positionierungsloch (1102) von einem siebten Positionierungsloch (1107) um 180° beabstandet ist, ein drittes Positionierungsloch (1103) von einem achten Positionierungsloch (1108) um 180° beabstandet ist, ein viertes Positionierungsloch (1104) von einem neunten Positionierungsloch (1109) um 180° beabstandet ist, und ein fünftes Positionierungsloch (1105) von einem zehnten Positionierungsloch (1110) um 180° beabstandet ist; und wenn die D-Achsen-Mittellinie des Magnetpols, die dem ersten Positionierungsloch (1101) entspricht, als eine Referenzlinie genommen wird, die Winkel θ1, θ2, θ3, θ4 und θ5 zwischen der Referenzlinie und den Verbindungslinien von dem Mittelpunkt des Blechs zu den Mittelpunkten des ersten Positionierungslochs (1101), des zweiten Positionierungslochs (1102), des dritten Positionierungslochs (1103), des vierten Positionierungslochs (1104) und des fünften Positionierungslochs (1105) in einem Bereich von 0,5° bis 1°, von 41,5° bis 42°, von 84° bis 84,5°, von 94° bis 94,5° bzw. von 136,5° bis 137° liegen.

11. Rotationsmotorblech nach Anspruch 2, wobei ein Abstand (D5) von dem radial äußeren Ring von Nietpunkten zu dem Außenkreis des Blechs in einem Bereich von 7,5 mm bis 8,5 mm liegt und ein Abstand (D4) von dem radial inneren Ring von Nietpunkten zu dem Innenkreis des Blechs in einem Bereich von 3,5 mm bis 4,5 mm liegt.

12. Rotationsmotorrotor, umfassend eine Drehwelle, eine Positionierschraube und eine Anzahl von Rotationsmotorblechen nach einem der vorhergehenden Ansprüche, wobei jedes der Rotationsmotorbleche über das zentrale kreisförmige Loch des Rotationsmotorblechs auf die Drehwelle gesteckt ist, wobei eine Schrägstellung mehrerer Segmente der Magnetpole durch Zusammenwirken zwischen den Positionierlöchern (11) und der Positionierschraube erreicht wird.

13. Rotationsmotorrotor nach Anspruch 12, wobei die Anzahl der schrägen mehreren Segmente der Magnetpole sechs ist, wobei, wenn ein erstes Segment als Referenz und eine Richtung gegen den Uhrzeigersinn als positiv genommen wird, von einem sechsten Segment eines Eisenkerns zu einem ersten Segment des Eisenkerns gesehen, die Drehwinkel von einem zweiten Segment zu dem sechsten Segment des Eisenkerns relativ zu einem benachbarten vorherigen Segment 2,5°, 2,5°, 1,25°, -2,5° bzw. -2,5° betragen.

## Revendications

1. Tôle de moteur rotatif, comprenant un trou circulaire central définissant un point central de la tôle, ainsi qu'un corps de tôle, ledit corps de tôle présentant un cercle inscrit défini par un contour dudit trou circulaire central, ledit corps de tôle présentant un cercle exinscrit défini par un contour extérieur circulaire dudit corps de tôle, le corps de tôle comprenant une pluralité de pôles magnétiques répartis dans une direction circonférentielle du corps de tôle, et chaque pôle magnétique comprenant une paire de premières rainures d'aimant (1) et une paire de deuxièmes rainures d'aimant (2),
dans laquelle, pour chaque pôle magnétique, la paire de premières rainures d'aimant (1) et la paire de deuxièmes rainures d'aimant (2) sont toutes deux réparties symétriquement par rapport à une ligne centrale d'axe D (13) du pôle magnétique, respectivement ; un espacement entre la paire de premières rainures d'aimant (1) et un espacement entre la paire de deuxièmes rainures d'aimant (2) sont tous deux élargis dans une direction circonférentielle radialement extérieure de la tôle le long de la ligne centrale d'axe D (13) du pôle magnétique ; et un trou de passage (5) symétrique autour de la ligne centrale d'axe D (13) du pôle magnétique est disposé entre les deux deuxièmes rainures d'aimant (2) de ladite paire de deuxièmes rainures d'aimant (2) dudit pôle magnétique ;
dans laquelle, pour chaque pôle magnétique,
des premiers ponts magnétiques (6) sont formés entre des extrémités radialement extérieures (101) de chacune des rainures d'aimant de la paire de premières rainures d'aimant (1) et un cercle exinscrit de la tôle, respectivement ;
un deuxième pont magnétique (7) est formé entre des extrémités radialement intérieures (102) de chacune des rainures d'aimant de la paire de premières rainures d'aimant (1) ; des troisièmes ponts magnétiques (8) sont formés entre des extrémités radialement extérieures (201) de chacune des rainures d'aimant de la paire de deuxièmes rainures d'aimant et le cercle exinscrit de la tôle, respectivement ; et des quatrièmes ponts magnétiques (9) sont formés entre des extrémités radialement intérieures (202) de chacune des rainures d'aimant de la paire de deuxièmes rainures d'aimant (2) et le trou de passage (5), respectivement ;
dans laquelle un trou de réduction de poids (10) est disposé entre ledit cercle inscrit de la tôle et une zone entre deux pôles magnétiques adjacents respectifs ;
et dans laquelle
un trou de positionnement (11) est disposé entre deux trous de réduction de poids adjacents respectifs ;
**caractérisée en ce que** chaque trou de réduction de poids (10) inclut cinq bords, et dans laquelle, pour chaque trou de réduction de poids (10), un bord radialement intérieur dudit trou de réduction de poids (10) est un segment de ligne arquée ayant le point central de la tôle comme point de cercle, et une distance (D2) entre ledit bord radialement intérieur et le cercle inscrit de la tôle varie de 6,5 mm à 7,5 mm ; deux bords médians dudit trou de réduction de poids (10) sont parallèles l'un à l'autre et présentent une distance (D9) de 12,5 mm à 13,5 mm ; chacun parmi deux bords radialement extérieurs dudit trou de réduction de poids (10) est parallèle à un bord radialement intérieur de la deuxième rainure d'aimant (2) la plus adjacente audit bord extérieur dudit trou de réduction de poids (10) parmi lesdites deuxièmes rainures d'aimant (2), et une distance (D1) entre lesdits bords radialement extérieurs et ladite deuxième rainure d'aimant (2) la plus adjacente varie de 6,5 mm à 7,5 mm ; une distance (D3) entre le point le plus extérieur radialement dudit trou de réduction de poids (10) et ledit cercle exinscrit de la tôle varie de 15 mm à 16 mm ; et une distance (D8) entre ledit point le plus extérieur radialement et ledit bord radialement intérieur dudit trou de réduction de poids (10) varie de 18,5 mm à 19,5 mm.

2. Tôle de moteur rotatif selon la revendication 1, dans laquelle un anneau radialement intérieur de points de rivetage (12) et un anneau radialement extérieur de points de rivetage (12) sont répartis dans le corps de tôle ; et les points de rivetage (12) desdits deux anneaux sont tous disposés sur des lignes symétriques de pôles magnétiques adjacents de ladite tôle de moteur rotatif, dans laquelle lesdits points de rivetage de l'anneau radialement extérieur de points de rivetage sont disposés entre des pôles magnétiques adjacents, et lesdits points de rivetage de l'anneau radialement intérieur de points de rivetage sont disposés entre les trous de réduction de poids (10) et le cercle inscrit de la tôle.

3. Tôle de moteur rotatif selon la revendication 2, dans laquelle, avec chacun desdits pôles magnétiques, un angle α1 entre lesdites premières rainures d'aimant (1) de ladite paire de premières rainures d'aimant (1) de ce pôle magnétique est supérieur à un angle α2 entre les deuxièmes rainures d'aimant (2) de ladite paire de deuxièmes rainures d'aimant (2) de ce pôle magnétique ; dans laquelle l'angle α1 varie de 130° à 135°, et l'angle α2 varie de 95° à 105°.

4. Tôle de moteur rotatif selon la revendication 2, dans laquelle chacune des premières rainures d'aimant (1) est configurée pour positionner un premier aimant (3) dans ladite première rainure d'aimant (1), dans laquelle chacune des deuxièmes rainures d'aimant (2) est configurée pour positionner un deuxième aimant (4) dans ladite deuxième rainure d'aimant (2), dans laquelle, lorsqu'une paire de premiers aimants (3) est positionnée dans ladite paire de premières rainures d'aimant (1) de l'un quelconque desdits pôles magnétiques et qu'une paire de deuxièmes aimants (4) est positionnée dans ladite paire de deuxièmes rainures d'aimant (2) de ce pôle magnétique, un angle d'arc polaire (β1) entre lesdits premiers aimants (3) de ladite paire de premiers aimants (3) varie de 14° à 15°, dans laquelle un angle d'arc polaire (β2) entre lesdits deuxièmes aimants (4) de ladite paire de deuxièmes aimants (4) varie de 30° à 31°, et dans laquelle une distance (D7) entre un point médian d'un bord radialement intérieur de l'un quelconque desdits premiers aimants (3) de ladite paire de premiers aimants (3) et un point médian d'un bord radialement extérieur du deuxième aimant (4) de ladite paire de deuxièmes aimants (4) le plus adjacent au premier aimant (3) varie de 5,5 mm à 6,5 mm.

5. Tôle de moteur rotatif selon la revendication 2, dans laquelle, avec chacun desdits pôles magnétiques, des bords radialement intérieurs et extérieurs du trou de passage (5) de ce pôle magnétique sont perpendiculaires à la ligne centrale d'axe D (13) de ce pôle magnétique ; dans laquelle deux bords du trou de passage (5) sont parallèles à la ligne centrale d'axe D (13) ; et les bords du trou de passage (5) présentant une largeur de 7 mm à 8 mm.

6. Tôle de moteur rotatif selon la revendication 5, dans laquelle, avec chacun desdits pôles magnétiques, une ligne de liaison entre deux points de la paire de deuxièmes rainures d'aimant (2) de ce pôle magnétique, lesquels présentent une distance la plus courte par rapport à un point central de la tôle, est colinéaire avec le bord radialement intérieur du trou de passage (5) de ce pôle magnétique, et une distance (D6) entre le bord radialement extérieur du trou de passage (5) et une ligne reliant deux points les plus proches de la paire de deuxièmes aimants (4) lorsque ceuxci sont positionnés dans ladite paire de deuxièmes rainures d'aimant (2) varie de 2 mm à 2,5 mm.

7. Tôle de moteur rotatif selon la revendication 2, dans laquelle chacun des premiers ponts magnétiques (6) présente une largeur variant de 0,9 mm à 1,1 mm, chacun des deuxièmes ponts magnétiques (7) présente une largeur variant de 0,9 mm à 1,1 mm, chacun des troisièmes ponts magnétiques (8) présente une largeur variant de 1,4 mm à 1,6 mm, et chacun des quatrièmes ponts magnétiques (9) présente une largeur variant de 1,1 mm à 1,2 mm.

8. Tôle de moteur rotatif selon la revendication 2, dans laquelle une ligne d'extension d'un bord long de chacune des deuxièmes rainures d'aimant (2) est tangente à l'extrémité radialement intérieure (202) de cette deuxième rainure d'aimant (2).

9. Tôle de moteur rotatif selon la revendication 2, dans laquelle les trous de positionnement (11) sont répartis entre les trous de réduction de poids (10),
dans laquelle une première paire desdits trous de positionnement (11) est répartie entre une première paire de trous de réduction de poids (10) adjacents,
dans laquelle une deuxième paire desdits trous de positionnement (11) est répartie entre une deuxième paire de trous de réduction de poids (10) adjacents, dans laquelle la première paire de trous de réduction de poids (10) adjacents et la deuxième paire de trous de réduction de poids (10) adjacents sont symétriques entre elles autour du point central de la tôle de moteur rotatif, et
dans laquelle un trou de positionnement (11) est réparti entre deux trous de réduction de poids (10) adjacents respectifs.

10. Tôle de moteur rotatif selon la revendication 1, dans laquelle le nombre de pôles magnétiques s'élève à huit, et de façon correspondante, le nombre de trous de positionnement (11) s'élève à dix, dans laquelle un premier trou de positionnement (1101) est espacé d'un sixième trou de positionnement (1106) de 180°, un deuxième trou de positionnement (1102) est espacé d'un septième trou de positionnement (1107) de 180°, un troisième trou de positionnement (1103) est espacé d'un huitième trou de positionnement (1108) de 180°, un quatrième trou de positionnement (1104) est espacé d'un neuvième trou de positionnement (1109) de 180°, et un cinquième trou de positionnement (1105) est espacé d'un dixième trou de positionnement (1110) de 180° ; et prenant la ligne centrale d'axe D du pôle magnétique correspondant au premier trou de positionnement (1101) comme ligne de référence, des angles θ1, θ2, θ3, θ4 et θ5 entre la ligne de référence et des lignes de liaison entre le point central de la tôle et des points centraux du premier trou de positionnement (1101), du deuxième trou de positionnement (1102), du troisième trou de positionnement (1103), du quatrième trou de positionnement (1104) et du cinquième trou de positionnement (1105) varient de 0,5° et 1°, de 41,5° à 42°, de 84° à 84,5°, de 94° à 94,5°, et de 136,5° à 137°, respectivement.

11. Tôle de moteur rotatif selon la revendication 2, dans laquelle une distance (D5) entre l'anneau radialement extérieur de points de rivetage et le cercle exinscrit de la tôle varie de 7,5 mm à 8,5 mm, et une distance (D4) entre l'anneau radialement intérieur de points de rivetage et le cercle inscrit de la tôle varie de 3,5 mm à 4,5 mm.

12. Rotor de moteur rotatif comprenant un arbre de rotation, une vis de positionnement, et un certain nombre de tôles de moteur rotatif selon l'une quelconque des revendications précédentes, dans lequel chacune desdites tôles de moteur rotatif est emmanchée sur l'arbre de rotation par le biais dudit trou circulaire central de la tôle de moteur rotatif, dans lequel une inclinaison d'une multitude de segments desdits pôles magnétiques est obtenue par coopération entre les trous de positionnement (11) et la vis de positionnement.

13. Rotor de moteur rotatif selon la revendication 12, dans lequel le nombre de la multitude de segments inclinés desdits pôles magnétiques s'élève à six, dans lequel, prenant un premier segment comme référence et une direction opposée au sens des aiguilles d'une montre comme positive, vus depuis un sixième segment d'un noyau de fer vers un premier segment du noyau de fer, des angles de rotation à partir d'un deuxième segment jusqu'au sixième segment du noyau de fer par rapport à un segment précédent adjacent mesurent 2,5°, 2,5°, 1,25°, -2,5°, et -2,5°, respectivement.
